# EUROPEAN PATENT SPECIFICATION

(11) **EP 2 708 346 B1**
(45) Date of publication and mention of the grant of the patent: **26.10.2016**
(21) Application number: 13005326.7
(22) Date of filing: 22.03.2010
(51) Int. Cl.: B29C 49/00, B65D 75/58

(54) **Apparatus for thermoforming objects**
Vorrichtung zum Warmformen von Objekten
Appareil de thermoformage d'objets

(30) Priority: 24.03.2009 IT MO20090070; 24.03.2009 IT MO20090069
(43) Date of publication of application: 19.03.2014
(62) Divisional of application: 10716068.1
(73) Proprietor: Sarong Societa' Per Azioni, 42046 Reggiolo (RE) (IT)
(72) Inventor: Bartoli, Andrea, 42100 Reggio Emilia (RE) (IT); Bottazzi, Claudio, 46023 Gonzaga (Mantova) (IT)
(74) Representative: Molinari, Marinella

(56) References cited:
- WO-A1-99/37465
- WO-A1-99/64221
- WO-A2-02/070352
- DE-A1- 3 244 994
- GB-A- 1 119 176
- US-A- 3 142 089
- US-A- 3 396 430
- DATABASE WPI Week 199623 Thomson Scientific, London, GB; AN 1996-224660 XP002719409, -& JP H08 85146 A (TSUTSUNAKA PLASTIC IND CO LTD) 2 April 1996 (1996-04-02)

## Description

The present invention relates to an apparatus for making objects, for example containers, by thermoforming two webs of thermoformable sheet material that are mutually superimposed and coupled. In particular, the invention refers to an apparatus and a forming method for thermoforming objects by injecting a forming fluid.

The thermoforming apparatuses that are known for producing containers comprise a plurality of operating stations through which two webs of thermoformable sheet material are caused to advance by suitable advancing means, the two webs of thermoformable sheet material are unwound from respective reels and are arranged substantially facing one another superimposed.

The operating stations comprise a welding station in which the two webs are mutually welded so that between the latter containers preforms are defined. Such preforms, which are substantially similar to pockets or bags, are bounded by a weld that extends for a prevalent portion of the perimeter of the preforms and is interrupted at a zone of this perimeter in which an opening is defined.

The operating stations further comprise a forming station that includes an apparatus provided with a mould into which the preforms are inserted. A forming fluid, typically compressed air, is introduced inside the preforms, through the aforesaid apertures, and pushes the sheet material of the preforms to adhere to the walls of the cavities of the mould, thus providing a container.

Downstream of the welding station a cooling station can be provided in which the welds that have just been made are cooled and stabilised thermally to ensure that the welds have appropriate resistance to the mechanical stress to which they will be subjected in the subsequent forming station.

Upstream of the forming station a preheating station is generally provided in which the webs are prepared for the next forming operation, heating to a preset softening temperature the inside of each preform, i.e. the part of material bound by the welding, so as to increase the plasticity and deformability thereof.

The operating stations may further comprise a filling station, in which a product to be packaged is introduced inside the thus formed containers and a sealing station, in which the openings disclosed above are sealed so as to enclose the product inside the containers. Downstream of the sealing station a blanking station is provided in which the filled and sealed containers are separated singly, or in groups, from the webs of coupled sheet material.

The objects and containers made with the known machines disclosed above are easier to make and cheaper than the objects obtained by extrusion or injection-moulding processes. Nevertheless, the objects or containers that are makable are substantially formed of two opposite walls that form half moulds joined by a peripheral welding edge that lies on a plane coinciding with the vertical plane along which the two webs of thermoformable sheet material are moved. The welding edge generally forms a peripheral flap that extends outwardly compared with the half moulds.

Objects or containers with a complex and irregular shape, in particular provided with undercut portions on one or both walls, cannot in fact be made by known apparatuses because the half moulds could not be extracted from the respective half moulds after being formed because of the aforesaid undercut portions.

In order to produce objects or containers with a complex shape and/or with undercut portions injection-moulding processes are usually used that are noticeably more complex and expensive.

In known thermoforming apparatuses the blanking operation is complex and laborious to achieve, particularly if said blanking is performed substantially on the level of the external profile of the container to contain the dimensions of the welding edge that protrudes externally. Great precision is in fact required in transferring and positioning the containers from the forming station to the blanking station.

In the case of play in the apparatus and/or dilation and stretching of the sheet-material webs, the blanking operation can easily lead to the creation of containers that are not perfectly blanked, i.e. with welding edges that protrude excessively outwards, or vice versa with undesired incisions or cuts on the walls of the container.

Another drawback of known apparatuses resides in the fact that the preforms, as they are heated in the preheating station, upstream of the forming station, may in the latter reach a temperature that is lower than the optimum softening temperature, owing to the distance, i.e. the time necessary for the transfer. A heating temperature that is lower than the optimum temperature may cause irregular deformation of the material during forming and/or anomalous tensions or stress in the material at the end of forming.

It is thus necessary to increase the heating temperature to have the necessary softening temperature in the forming station. A higher temperature can nevertheless damage the materials and any way entails greater energy consumption, i.e. greater apparatus running costs.

Known thermoforming apparatuses also have the drawback of comprising in addition to the welding station and the forming station a blanking station and a preheating station, this causing an increase in the total dimensions of the apparatus and greater complexity of the web-moving means.

Known apparatuses are disclosed in US 3142089A, GB 1119176A, WO99/64221A1, abstract of JPH0885146A, DE3244994A1, US3396430A, WO02/070352A2 and WO99/37465A1.

An object of the present invention is to improve known apparatuses and methods for making objects, in particular containers, by thermoforming two webs of thermoformable sheet material that are mutually superimposed and coupled.

Another object is to make an apparatus and a thermoforming method that enable objects to be made by thermowelding two webs of mutually superimposed and coupled sheet material, in particular containers, formed by two opposite walls joined by a peripheral joining zone, or welded peripheral edge, that extends along a curved surface.

Still another object is to make an apparatus and a thermoforming method that enable objects with a complex and irregular shape to be made, in particular objects provided with portions protruding from one or both walls.

A further object is to make a thermoforming apparatus having compact and contained dimensions, that is able to make objects accurately and precisely from preforms obtained by welding on the two webs of thermoformable sheet material.

Another further object is to obtain an apparatus that is able to blank with precision and accuracy the objects after the objects have been formed, eliminating the problems of transferring and positioning webs of the known thermoforming apparatuses.

A still further object is to obtain an apparatus that enables objects to be made, in particular containers, provided with welding edges protruding to a limited extent outwardly. Another further object is to obtain an apparatus that is able to preheat the webs to an optimum softening temperature before the forming thereof.

In a first aspect of the invention an apparatus is provided for making objects according to claim 1.

Owing to the invention it is possible to make, by thermoforming two webs of mutually superimposed and coupled material, objects formed by two shaped walls and defining opposite half moulds, joined by a peripheral joining zone or peripheral welded edge, that extends along a curved surface, said curved surface being of the single curvature type or of the complex curvature type.

In particular, the apparatus comprises forming means that includes first forming mould *[continue at page 4]*

means and second forming mould means that are provided with respective curved shaped abutting walls, arranged for abutting on and pressing against one another the webs of thermoformable material in the forming step at least along the welding zones. In said forming step, injecting a forming fluid inside the preforms enables objects to be formed that consist of two walls that are shaped and opposite that are connected along a welded peripheral edge that extends along a curved surface. The action of the forming fluid in fact induces the webs of sheet material not only to stick to the walls of the cavities of the mould means, taking on the shape thereof, but also to deform according to the curved surface defined by the abutting walls. The deformation of the welded peripheral edge occurs through the stretching of the plastics of the webs.

Owing to the thermoforming apparatus it is thus possible to make objects provided with a particularly original aesthetic appearance owing to the curved shape of the welded peripheral edge, which may form a peripheral flap that more or less protrudes outwards. It is also possible to make objects having a complex and irregular shape, that are in particular provided with portions protruding in an undercut, i.e. objects that normally have to be produced by complex and expensive injection-moulding processes.

In this case, as the aforesaid protruding portions are crossed by the curved surface defined by the welded peripheral edge, they are not undercut, thus making it possible to extract, or "demould" the object easily once it has been formed by the forming mould means.

The apparatus performs thermoforming of a first web of thermoformable material and a second web of thermoformable material, arranged mutually facing and welded together in defined welding zones such as to define preforms of the objects and comprises a forming station provided with forming means for forming the objects by injection of a forming fluid inside the preforms, and cutting means associated with the forming means and arranged for cutting the first web and the second web at the welding zones so as to separate the objects. Owing to the apparatus of the invention in the same operating station it is thus possible to make objects, in particular containers in a precise and rapid manner by forming and subsequent blanking of two facing webs of thermoformable sheet material. The precision of the blanking of the objects is ensured by the fact that this operation is performed immediately after the forming step. In this manner, as it is not necessary to transfer the formed objects to a subsequent and separate blanking station, possible positioning and aligning errors are avoided that are due to play of the movement means of the apparatus and associated with and/or due to dilation and extension of the webs of sheet material.

The precision of the cut of the webs that is obtainable with the apparatus of the invention enables objects to be produced that are provided with welded edges protruding to a limited extent outwards.

The apparatus thus enables a dedicated blanking station and corresponding systems for controlling the correct transfer and positioning of the objects inside the latter to be eliminated. The thermoforming apparatus of the invention is thus more compact, simpler and cheaper than known apparatuses.

In the apparatus of the invention preheating means is further provided that is associated with the forming means and arranged for heating the webs before the webs are formed. The preheating means comprises heating elements that are slidably housed in seat means of the first forming mould means of the forming means. The heating elements have a shape substantially corresponding to that of the preforms to be heated.

Owing to the apparatus of the invention it is thus possible to preheat, form and blank two facing webs of thermoformable sheet material in a same operating station to make objects, in particular containers. In addition to the advantage of the blanking precision of the objects - ensured by the fact that this operation is performed by the same forming apparatus immediately after forming - the advantage of performing preheating of the preforms immediately before forming is added, which can also occur at a preset and optimum softening temperature. Unlike known thermoforming apparatuses, a separate preheating station is not known, so possible problems of cooling of the webs during movement to the forming station are avoided. In this manner, it is possible to obtain optimum plastic deformation of the material of the webs and avoid the formation in said material of residual anomalous tensions or stress.

The apparatus of the invention enables both the blanking station and the preheating station to be eliminated, thus being more compact, simpler and cheaper than known thermoforming apparatuses.

In a further embodiment of the apparatus of the invention the forming means comprises first forming mould means and second forming mould means which are provided with respective curved abutting walls, said curved abutting walls being arranged for abutting on and pressing together the webs of thermoformable material along the welding zones in a first operating configuration in which forming of the objects is performed.

The abutting walls of the forming mould means can be surfaces with a simple curvature or surfaces with a complex curvature.

In the forming step, when first forming half moulds of the first forming mould means and the second forming half moulds of the second forming mould means are in the respective closing positions, or abutting on the webs, injecting a forming fluid inside the preforms enables objects to be formed that consist of two shaped and opposite walls connected along a welded peripheral edge that extends on a curved surface defined by the aforesaid curved abutting walls. The action of the forming fluid induces the first web and the second web not only to adhere to the walls of the cavities of the mould means, assuming the shape thereof, but also to deform according to the curved surface defined by the abutting walls curve. The welded peripheral edge is deformed by virtue of the stretch of the plastics of the webs.

This embodiment of the apparatus thus enables objects of a complex and irregular shape, in particular objects provided with undercut portions on one or both opposite walls to be made by thermoforming two webs of mutually superimposed and coupled sheet material. The curved abutting walls of the forming half moulds can, in fact, traverse the undercut portions so as to enable the object to be formed and to be easily extracted from the forming cavities.

Owing to the apparatus of the invention it is thus possible to produce objects that normally have to be produced by complex and costly injection-moulding processes.

The invention can be better understood and implemented with reference to the attached drawings that illustrate some embodiments thereof by way of non-limiting example, in which:
Figure 1 is a schematic plan view of the apparatus of the invention to make objects by forming two webs of thermoformable sheet material;
Figure 2 is a section according to the line II-II in Figure 1, showing forming means of the apparatus in an open position;
Figure 3 is a section like that in Figure 2, showing the forming means in a closed position;
Figure 4 is a partial and schematic front view of the apparatus in Figure 1, showing welding means;
Figure 5 is a partial and schematic front view of the apparatus in Figure 1, showing preheating means;
Figure 6 is a plan view of an object made for forming two webs of thermoformable sheet material with the apparatus in Figure 1;
Figure 7 is a lateral view of the object in Figure 6;
Figure 8 is a frontal view of the object in Figure 6;
Figure 9 is a schematic plan view of a version of the apparatus in Figure 1;
Figure 10 is a section according to the line X-X in Figure 9, showing welding means in an open configuration;
Figure 11 is a section like that in Figure 10, showing the welding means in a welding operating configuration;
Figure 12 is a schematic cross section of the welding means in the welding operating configuration;
Figure 13 is a schematic plan view of another embodiment of the apparatus of the invention to make objects by forming two webs of thermoformable sheet material;
Figure 14 is a section according to the line XV-XV of Figure 13, showing forming means of the apparatus in an open configuration;
Figure 15 is a section like that in Figure 14, showing the forming means in a first operating configuration;
Figure 16 is a section like that in Figure 14, showing the forming means in a second operating configuration;
Figure 17 is an enlarged detail of Figure 16 showing cutting means of the forming means;
Figure 18 is a schematic plan view of a version of the apparatus in Figure 13;
Figure 19 is a section of the apparatus according to line XX-XX in Figure 18, showing forming means in the open configuration and preheating means in an inactive position;
Figure 20 is a section like that in Figure 19, showing the forming means in the first operating configuration and the preheating means in an active position;
Figure 21 is a section like that in Figure 19, showing the forming means in the first operating configuration and preheating means in the inactive position;
Figure 22 is a section like that in Figure 19, showing forming means in the second operating configuration and preheating means in the inactive position;
Figure 23 is a side view of an object made for forming two webs of thermoformable sheet material with the apparatus in Figure 13;
Figure 24 is a plan view of the object in Figure 23;
Figure 25 is a section of a version of the forming means of the apparatus in Figure 13 in an open configuration;
Figure 26 is a section like that in Figure 25, showing the forming means in a first operating configuration;
Figure 27 is a side view of an object made for forming two webs of thermoformable sheet material by the forming means in Figure 25;
Figure 28 is a plan view of the object in Figure 27.

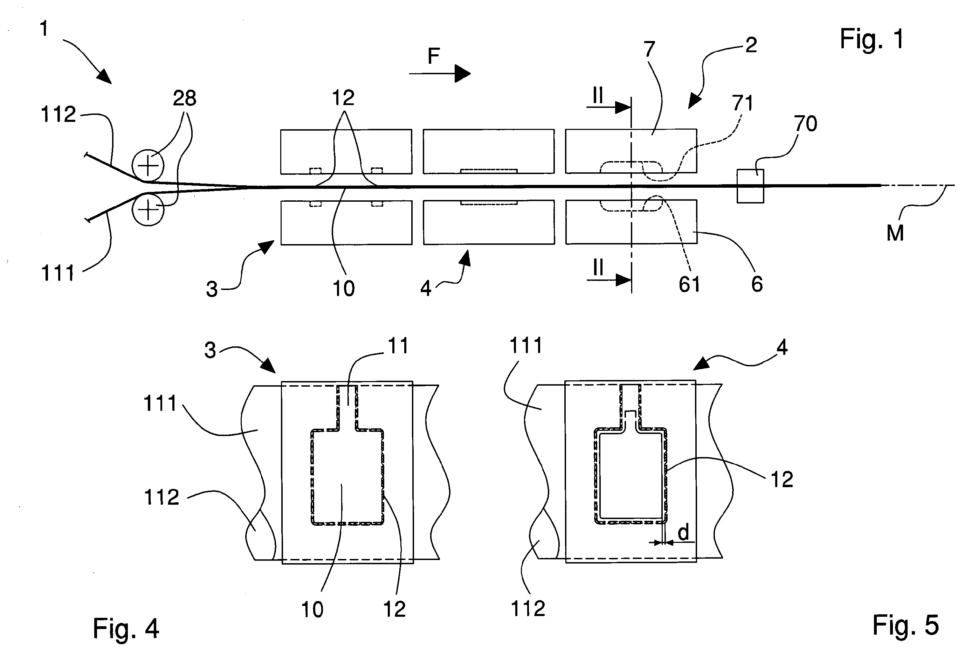

With reference to figures 1 to 5, there is shown an apparatus 1 to make objects 100, in particular containers, by forming a first web 111 of thermoformable sheet material and a second web 112 of thermoformable sheet material that are unwound from respective reels, which are not illustrated. The two webs 111, 112 of sheet material are moved forward in an indexed manner by movement means 70, of known type and not illustrated in detail in the figures, along a forward direction F, through a plurality of operating stations 2, 3, 4 of said apparatus 1.

Transmission means 28 is provided for directing the first web 111 of sheet material and the second web 112 of sheet material, such that they are mutually facing and substantially superimposed during advancing along the advancing direction F on a movement plane M. Alternatively, a single reel can be provided from which a thermoformable sheet material is unwound that is subsequently folded along the longitudinal axis thereof such as to define a pair of mutually facing webs.

The operating stations comprise at least one welding station 3 provided with welding mould means arranged for welding together the first web 111 and the second web 112 along defined welding zones 12, in particular along perimeter edges of the objects 100 to be formed. For this purpose, the welding mould means comprises two movable welding half moulds that are movable towards or away from one another along a transverse welding direction, in particular substantially orthogonally to the advancing direction F. In this manner, in the welding station 3 preforms 10 of objects 100 are obtained that are bounded by a welding zone 12 that extends along a perimeter edge of the preforms 10 except for a zone that defines an aperture 11 of the preforms 10 (Figure 4).

The apparatus 1 comprises a preheating station 4 placed downstream of the welding station 3 with respect to the advancing direction F. The preheating station 4 is provided with preheating mould means arranged for heating the first web 111 and the second web 112 approximately to the softening temperature, such as to prepare the aforesaid webs 111, 112 for the subsequent thermoforming operation. In particular, the preheating mould means comprises one or more heating portions having a profile substantially corresponding to that of the preform 10 and such as to remain spaced apart from the welding zones 12 of the preform 10 by a defined distance d (Figure 5). The welding zones must not, in fact, be preheated and softened as otherwise they would yield during the forming step. The distance d depends on the sheet material to be thermoformed and/or the geometry and shape of the object 100 to be formed.

The welding mould means of the welding station 3 and the preheating mould means of the preheating station 4 have respective abutting walls that are flat and parallel to the movement plane M of the webs 111, 112.

The two webs 111, 112 are thus welded and then heated, being maintained substantially coplanar with the movement plane M.

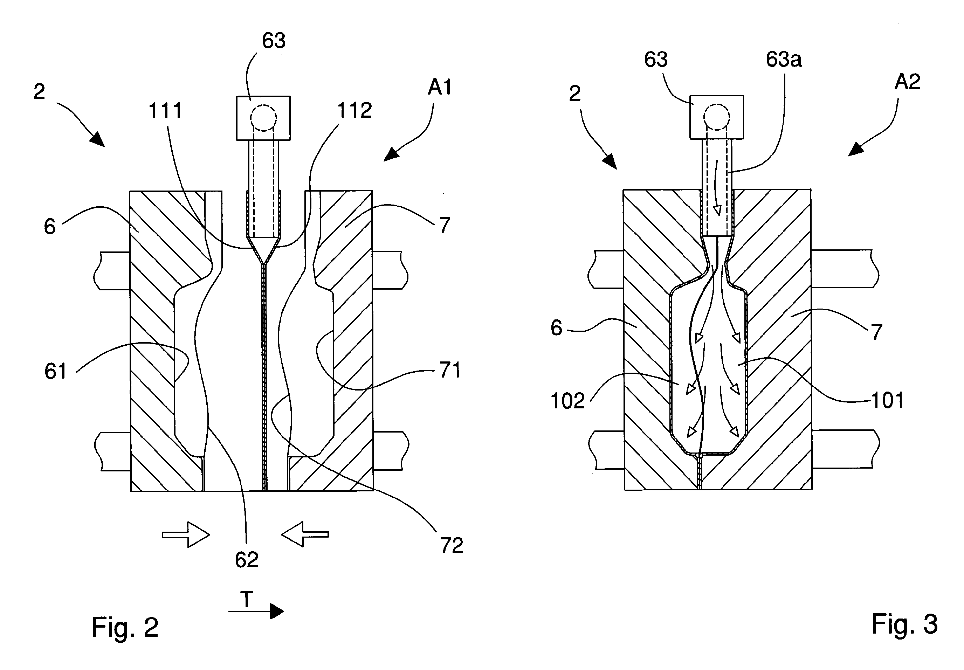

Downstream of the preheating station 4 there is provided a forming station 2 comprising, as illustrated in figures 2 and 3, forming means 6, 7 provided with cavity means 61, 71 for forming the objects 100.

The forming means comprises a forming half mould 6, provided with one or more cavities 61, and a further forming half mould 7, provided with one or more further cavities 71, said forming half moulds 6, 7 being movable away or towards one another in opposite directions along the movement direction T. In particular, the forming half moulds 6, 7 are movable between an open position A1 (Figure 2), in which the forming half mould 6 is spaced from the further forming half mould 7 to enable the webs 111, 112, to advance and a closed position A2 (Figure 3), in which the forming half moulds 6, 7 abut on and press together the webs 111, 112 for forming the objects 100.

In the closed position A2 the cavities 61, 71 of the forming half moulds form chambers in which the first web 111 and the second web 112 can be expanded by the forming fluid. For this purpose, the forming station 2 comprises injecting means 63 arranged for injecting inside the preforms 10 a forming fluid, typically compressed air, through the openings 11. The action of the forming fluid induces the first web 111 and the second web 112, which are made deformable through the effect of heat, to adhere to the walls of the cavities 61, 71, taking on the shape thereof, i.e. giving rise to opposite shaped walls 101, 102 of the containers 100.

The injecting means 63 comprises one or more cannulas 63a that are housed during the forming process in one or more recesses made in the forming half moulds 6, 7.

The apparatus 1 comprises driving means, which is not shown, that is suitable for moving the injecting means 63 towards and away from the forming means 6, 7.

The forming half mould 6 and the further forming half mould 7 have respectively a curved abutting wall 62 and a further curved abutting wall 72, which are complementary to one another and intended - in the closed position A2 - to abut on and press together the webs 111, 112, along the welding zones 12 and along a curved surface, i.e. a non-flat surface. The curved abutting walls 62, 72 can define surfaces with a simple curvature or surfaces with a complex curvature.

In the forming step, when the forming half moulds 6, 7 are in the closed position A2 abutting on the webs 111, 112, injecting the forming fluid inside the preforms 10 enables objects 100 to be formed comprising wall means 101, 102 connected along a peripheral joining zone 103 that extends along the curved surface defined by the abutting walls 62, 72. The wall means 101, 102 of the container 100 defines at least one housing 105 inside the wall means arranged for receiving a product.

The action of the forming fluid induces the first web 111 and the second web 112, which have been made deformable through the effect of the heat, not only to adhere to the walls of the cavities 61, 71 taking on the shape thereof, but also to deform at the peripheral joining zone 103, according to the curved surface defined by the curved abutting walls 62, 72. The peripheral joining zone 103 is deformed by virtue of the stretching of the plastics of the webs 111, 112.

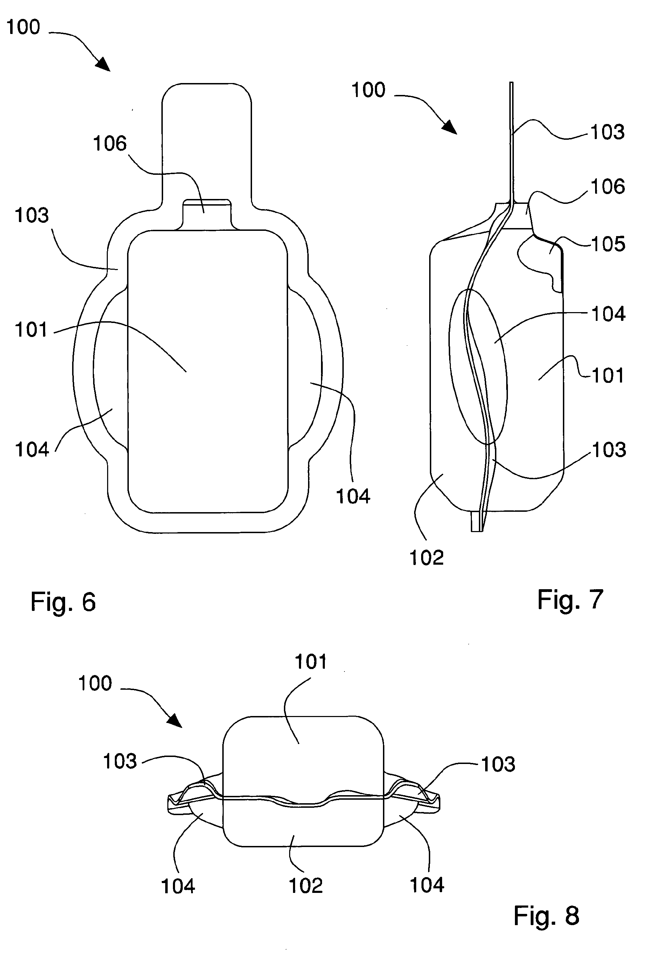

Once forming has taken place, the forming half moulds 6, 7 are returned to the open position A1 to enable the objects 100 to be transferred to a subsequent blanking station, which is not illustrated in the figures, in which they are separated from the webs 111, 112. The blanking enables a container 100 to be obtained that is provided with a peripheral joining zone that forms a welded peripheral edge 103, which is typically flap-shaped, protruding externally a preset width, which is constant or variable along the profile of the object and extends along the curved surface defined by the abutting walls (Figures 6, 7 and 8). It should be noted that in the illustrated example the welded peripheral edge 103 extends on a complex, curved and variously shaped surface.

The apparatus 1 of the invention enables objects with a complex and irregular shape, in particular objects 100 provided with protruding portions 104, 106 that are undercut, i.e. are not traversed by the same forming plane to be made from two webs 111, 112 of mutually superimposed and coupled sheet material. The curved abutting walls 62, 72 of the forming half moulds 6, 7 can, in fact, traverse the aforesaid protruding portions so as to enable the object to be formed and extracted easily from the forming cavities 61, 71.

It is thus possible to make objects that commonly have to be produced by complex and costly injection-moulding processes.

Compare with processes in which anonymous objects are obtained that are to be decorated in a step following forming, the use of thermoforming enables webs of already printed and decorated thermoformable sheet material to be used, forming being made centred on the print, according to various known techniques.

It is possible to produce objects that are substantially finished because they are already printed and decorated, thus significantly reducing production cost and time. Lastly, using webs of multilayered sheet material in which printing or decoration can be performed on an internal face of an external layer of the material, enables the inks to be enclosed inside the material, i.e. separated from the end user - unlike objects that are injection-moulded and then subsequently decorated - and from the product, for example food product, inserted inside the object.

The apparatus 1 of the invention enables objects with a customised shape to be formed that have a more pleasing and original aesthetic appearance than other objects with a more traditional appearance, by virtue of the shape and extent along the curved surface of the welded peripheral edge 103.

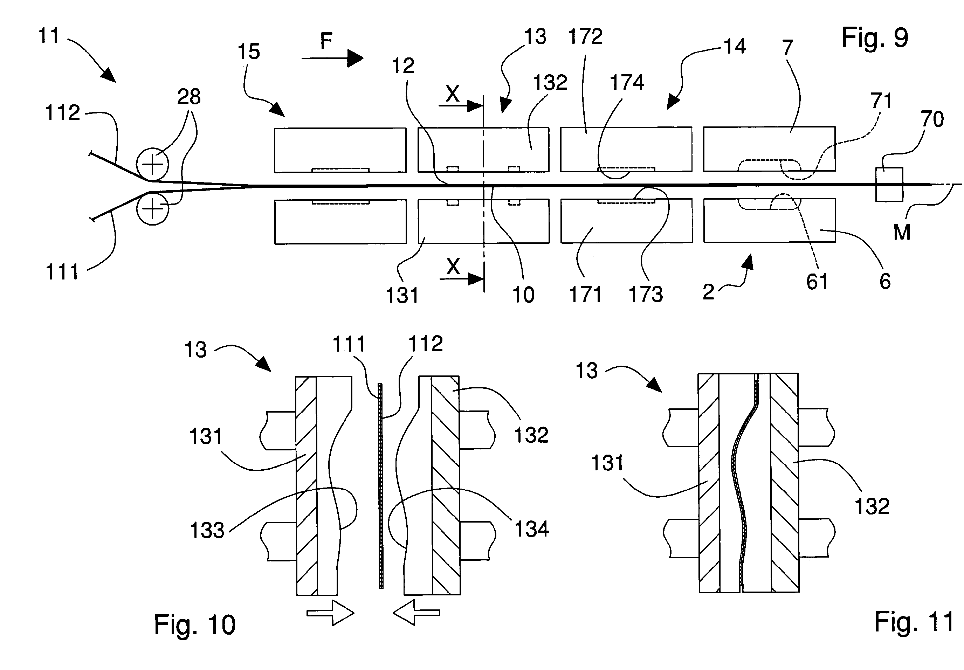

With reference to figures 9 to 11, a version of the thermoforming apparatus 11 is illustrated that differs from the embodiment disclosed above through the fact that the welding station 13 comprises welding half moulds 131, 132 that has respective curved abutting walls 133, 134, that is substantially the same as the curved abutting walls 62, 72 of the forming half moulds 6, 7 of the forming station 2.

The welding half moulds 131, 132, by the respective curved abutting walls 133, 134 make on the webs 111, 112 welding zones 12 that extend along a curved surface.

Figure 10 illustrates the welding half moulds 131, 132 in an opening position and provided with respective abutting walls 133, 134 that extend along a shaped curved surface.

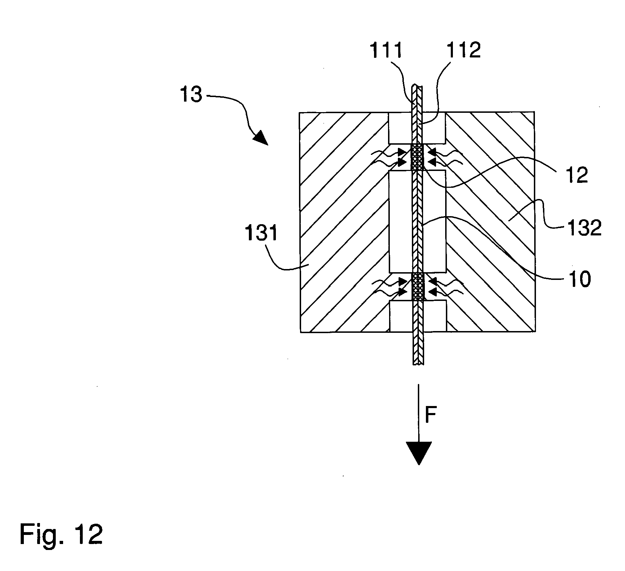

Figures 11 and 12 illustrate the welding half moulds 132, 134 in a welding position for making the preforms 10 bounded by the peripheral welding zone 12.

Similarly, the preheating station 14 includes heating half moulds 171, 172 provided with respective curved abutting walls 173, 174 and which are substantially the same as the abutting walls 62, 72 of the forming half moulds 6, 7.

In this embodiment of the thermoforming apparatus, a first deformation of the webs 111, 112 along a curved surface is thus already performed in the welding station 13 and subsequently in the preheating station 14.

In the forming station 2 the already partially deformed preforms 10 are formed by the forming fluid.

In order to facilitate deformation of the webs 111, 112 in the welding station 13, upstream of the latter at least one further preheating station 15 is provided. In this further preheating station 15, the first web 111 and the second web 112 are heated approximately up to a preset temperature, so as to prepare the aforesaid webs 111, 112 for the deformation set in the subsequent operating stations.

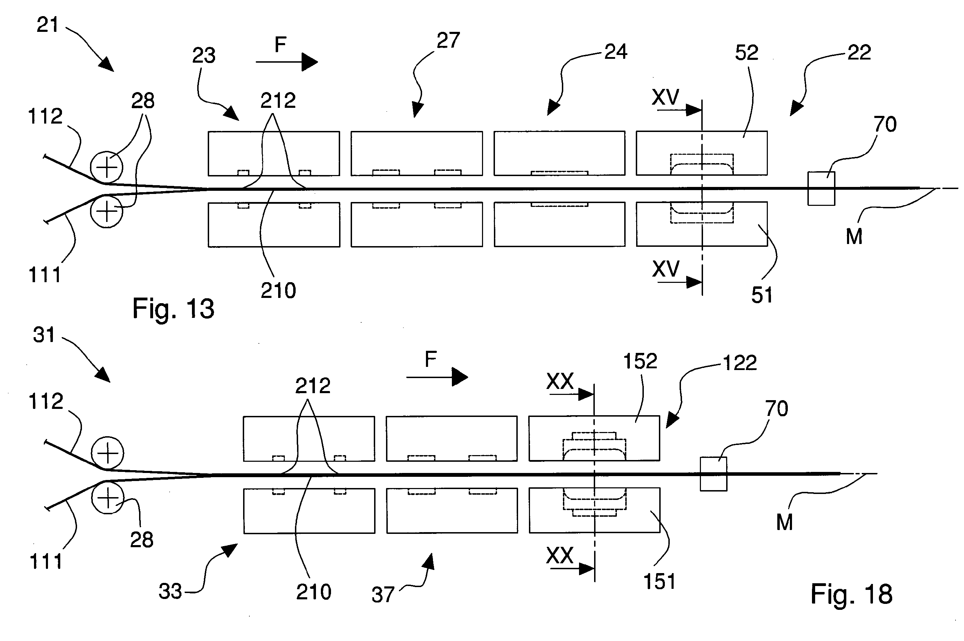

Figure 13 illustrates another embodiment of the apparatus 21 for thermoforming objects 200 by forming a first web 111 of thermoformable sheet material and a second web 112 of thermoformable sheet material advanced in an indexed manner along an advancing direction F, through a welding station 23, a cooling station 27, a preheating station 24 and a forming station 22.

The welding station 23 is provided with welding half moulds arranged for welding together the first web 111 and the second web 112 along defined welding zones 212, so as to make preforms 210 of the objects 200.

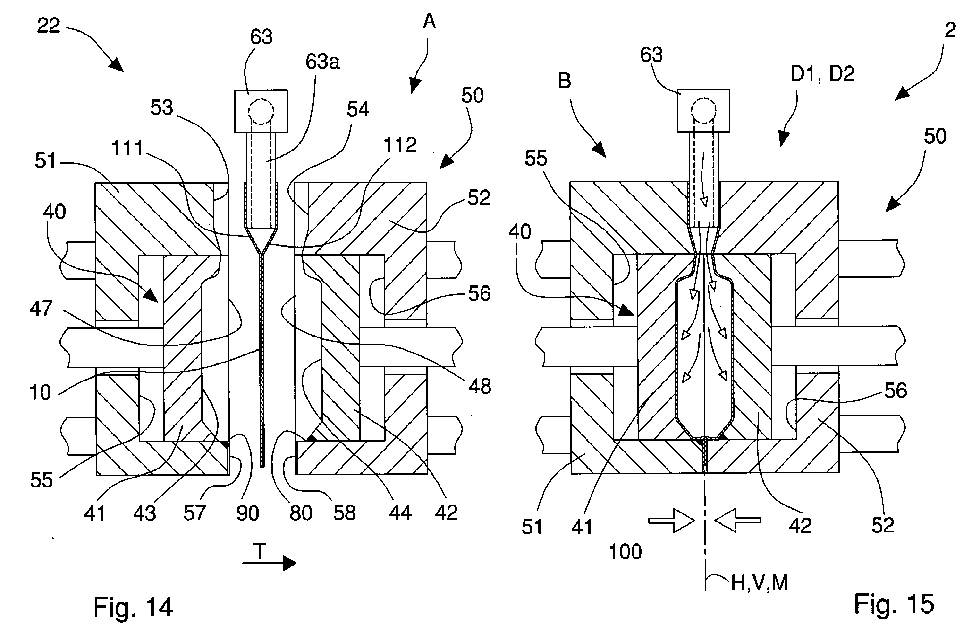

The cooling station 27, located downstream of the welding station 23, with respect to the advancing direction F, is provided with cooling mould means that cools the welding zones 212 to stabilise thermally the sheet material and ensure that it appropriately withstands the mechanical stress to which said welding zones will be subjected in the forming station. The preheating station 24 located downstream of the cooling station 27 with respect to the advancing direction F is provided with preheating mould means to heat the first web 111 and the second web 112 approximately to the softening temperature, so as to prepare the aforesaid webs 111, 112 for the subsequent forming operation provided for by the machining cycle. In particular, the preheating mould means comprises heating portions having a profile substantially corresponding to that of the preform 210 and such as to remain spaced apart from the welding zones 212 of the preform 210 by a defined distance. Downstream of the preheating station 24 the forming station 22 is provided comprising, as illustrated in figures 14 to 17, forming means 40, 50 provided with cavity means 43, 44 for forming the objects 200 and with cutting means 80, 90, associated with said forming means 40, 50 and arranged for cutting the webs 111, 112 at the welding zones 212 so as to separate the aforesaid objects 200 once they are formed.

The forming means comprises first forming mould means 40 and second forming mould means 50 that are movable along a movement direction T, that is transverse and in particular almost orthogonal to the advancing direction F of the webs 111, 112.

The first forming mould means 40 and the second forming mould means 50 cooperating together to form the objects 200 and subsequently to cut or blank the welding zones 212, i.e. the welded peripheral edges, so as to separate the objects 200 formed from the webs 111, 112, as explained in greater detail further on in the description.

The first forming mould means 40 is provided with cavities 43, 44 arranged for receiving the preforms 210. The second forming mould means 50 is arranged for receiving and retaining portions of the webs 111, 112 outside the preforms 210 and the welding zones 212.

The first forming mould means 40 is slidably housed inside the second forming mould means 50, with respect to which it is movable, drivable along a blanking stroke as explained below in the description.

The first forming mould means 40 comprises a first forming half mould 41, provided with one or more first cavities 43, and a further first forming half mould 42, provided with one or more further first cavities 44, said first forming half moulds 41, 42 being movable away and towards one another, in opposite directions, along the movement direction T.

The second forming mould means 50 comprises a second forming half mould 51 and a further second forming half mould 52, which are also movable away and towards one another, in opposite directions, along the movement direction T.

The second forming half mould 51 comprises a gap 55 inside which the first forming half mould 41 is mounted slidably. Similarly, the further second forming half mould 52 comprises a further gap 56 inside which the further forming half mould 42 is slidably mounted.

The shape of the first forming half moulds 41, 42 and the shape of the gaps 55, 56 substantially correspond to the shape of the formed object 200.

The first forming half moulds 41, 42 and the second forming half moulds 51, 52 are movable in the same direction, i.e. substantially integral, along the movement direction T between an open configuration A in which the first forming half mould 41 and the second forming half mould 51 are respectively distanced from the further first forming half mould 42 and from the further second forming half mould 52 to enable the webs 111, 112 to advance and a first operating configuration B, in which the first forming half mould 41 and the further first forming half mould 42 are in a first closing position D1, whilst the second forming half mould 51 and the further second forming half mould 52 are in a second closing position D2. In the respective closing positions D1, D2 the first forming half moulds 41, 42 and the second forming half moulds 51, 52 abut on and press the webs 111, 112 for forming the objects 200.

The first forming half mould 41 and the further first forming half mould 42 in fact have first abutting walls 47, 48 that are almost flat and parallel to a movement plane M that is coplanar to and along which said webs 111, 112 move.

Equally, the second forming half mould 51 and the further second forming half mould 52 have second abutting walls 57, 58 that are almost flat and parallel to the movement plane M.

In the first closing position D1 of the first forming mould means 40, the first abutting walls 47, 48 abut along a first abutting plane H. In the second closing position D2 of the second forming mould means 50, the second abutting walls 57, 58 abut along a second abutting plane V.

In the first operating configuration B the first abutting plane H and the second abutting plane V lie substantially coplanar to one another and to the movement plane M.

The first forming half moulds 41, 42 and the second forming half moulds 51, 52, when they are arranged in the respective closing positions D1, D2, are further movable in relation to one another along the movement direction T from the first operating configuration B to a second operating configuration C, and on the other hand to perform a blanking stroke having a preset length.

With reference to the embodiment illustrated in figures 14 to 17, the first forming mould means 40 are in this case movable with respect to the second forming mould means 50.

In the second operating configuration C, the first abutting plane H and the second abutting plane V are no longer coplanar, the second abutting plane V being coplanar with the webs 111, 112.

The first forming half mould means 41, 42 in the respective first closing position D1 are moved so as to perform said blanking stroke inside the gaps 55, 56.

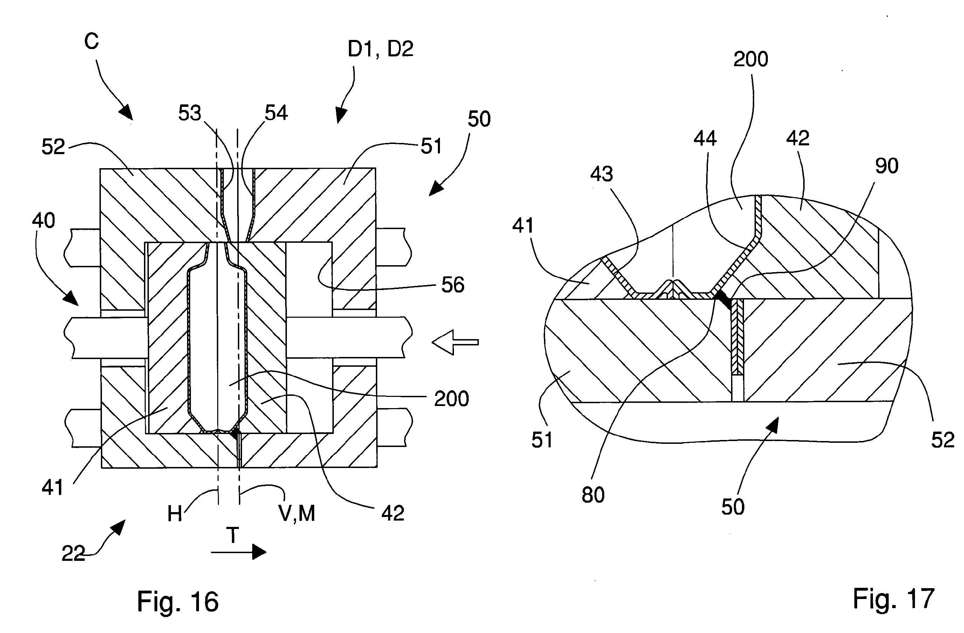

With reference to Figure 16, the first forming half mould means 41, 42 is moved with respect to the second half mould means 51, 52 so as to move from the further gap 56 to the gap 55.

Alternatively, it may be the second forming mould means 51, 52 that is movable in relation to the first forming mould means 40; in this case the webs 111, 112 are subject to a side shift in the movement direction T.

In the first operating configuration B (Figure 15) the first forming half mould 41 and the further first forming half mould 42, the second forming half mould 51 and the further second forming half mould 52 are in the closing positions D1, D2 abutting on the webs 111, 112 by the respective flat abutting walls, such that the cavities 43, 44, form chambers in which the first web 111 and the second web 112 can be expanded by the forming fluid. For this purpose, the forming station 1 comprises injecting means 63 arranged for injecting inside the preforms 210 a forming fluid, typically compressed air.

The action of the forming fluid induces the first web 111 and the second web 112, which have been made deformable through the effect of the heat, to adhere to the walls of the cavities 43, 44, taking on the shape thereof, so as to give rise to the shaped and opposite walls 201, 202 of the object 200.

The injecting means 63 comprises one or more cannulas 63a that are housed during the forming process in one or several respective second cavities 53, 54 made in the second forming half moulds 51, 52.

The apparatus 1 comprises driving means, which is not shown, that is suitable for translating the injecting means 63 towards and away from the forming means 40, 50.

Once the forming of the objects 200 has been performed, the first forming mould means 40 is moved with respect to the second forming mould means 50 from the first operating configuration B to the second operating configuration C so as to perform the blanking operation of the webs 111, 112 at the welding zones 212.

For this purpose, the cutting means comprises first cutting means 80 associated with the first forming half moulds 41, 42 and second cutting means 90 associated with the second forming half moulds 51, 52, said first cutting means 80 and said second cutting means 90 interacting together to blank the webs 111, 112.

The first cutting means 80 substantially comprises a first cutting profile or edge associated with a peripheral edge of the further first cavity 44 of the further first forming half mould 42. The second cutting means 90 comprises a second profile or cutting edge associated with a respective peripheral edge of the gap 55 of the second forming half mould 51, said second cutting profile 90 facing the first forming mould means 41, 42 and the further second forming half mould 52.

If the blanking stroke occurs by shifting the first half mould forming means 41, 42 in relation to the second half mould means 51, 52, with movement from the gap 55 to the further gap 56, the first cutting means 80 will comprise a first cutting profile or edge associated with a peripheral edge of the first cavity 43. The second cutting means 90 will comprise a second cutting profile or edge associated with a respective peripheral edge of the further gap 56.

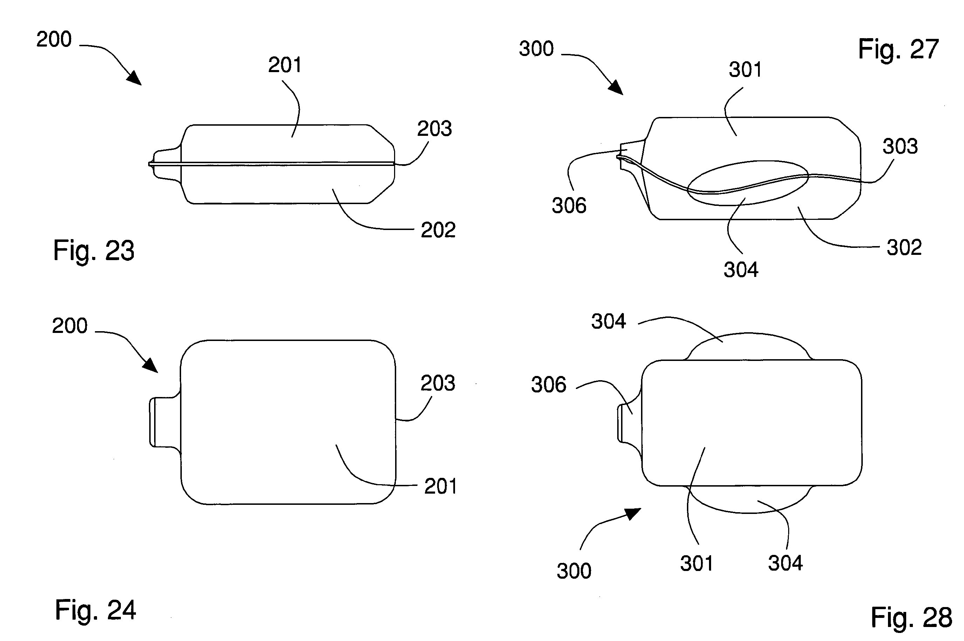

In the blanking stroke of the first forming mould means 40, i.e. in the shift from the first operating configuration B to the second operating configuration C, the first cutting profile 80 in collaboration with the second cutting profile 90 cuts the entire object 200 substantially flush along the external profile thereof, separating the object 200 from the webs 111, 112. As the sizes and the shape of the first forming half moulds 41, 42 and of the gaps 55, 56 substantially correspond to the dimensions and to the shape of the object 200, the latter has peripheral welding edges 203 that do not substantially protrude outwards or protrude in a very reduced manner (Figures 23 and 24).

Owing to the apparatus of the invention it is thus possible to make objects, in particular containers, by thermoforming two facing webs of sheet material, which containers are provided with welded edges that do not protrude outwards or protrude by a very reduced quantity. The precision of the blanking of the objects is ensured by the fact that this operation is achieved by the same apparatus, immediately after the forming step. In this manner, as it is not necessary to transfer the objects formed in a subsequent and separate blanking station, possible positioning and aligning errors are avoided that are due to the play of the movement means of the apparatus and/or to dilation and/or stretching of the webs of sheet material.

The first forming mould means 40, which is slidable in the blanking step inside the second forming mould means 50, further ensures a clean cut along the entire external profile of each object 200.

The apparatus of the invention thus enables a separate blanking station and corresponding control systems for controlling the correct transferring and positioning of the objects inside the latter to be eliminated, so as to obtain a thermoforming apparatus that is more compact, simpler and economical than known apparatuses.

The apparatus of the invention enables objects to be made that are generally made by extrusion or injection-moulding processes. With respect to processes in which anonymous objects are obtained to be decorated subsequently, using thermoforming enables webs of already moulded and decorated thermoformable sheet material to be made, forming being made centred on the print, according to various known techniques.

It is thus possible to produce products that are substantially finished because they are already printed and decorated, thus significantly reducing the time and costs of production of the objects. Lastly, using webs of multilayered sheet material in which printing or decoration can be performed on an internal face of an external layer of the material, enables the inks to be enclosed inside the material, i.e. to be separated from the end user-unlike objects that are injection-moulded and subsequently decorated - and from the product, for example food product, inserted inside the object.

With reference to figures 18 to 22, there is illustrated a version of the forming apparatus 31 that differs from the embodiment disclosed above by the fact that the forming station 122 comprises preheating means 35, 36 associated with the first forming mould means 140 and arranged for heating the first web 111 and the second web 112 approximately to the softening temperature, so as to prepare the aforesaid webs 111, 112 for the subsequent forming operation.

The preheating means 35, 36 comprises heating elements slidably housed inside the first forming half moulds 141, 142 of the first forming mould means 140, with respect to which it is movable.

In particular, the preheating means comprises one or more first heating elements 35, slidably inserted into respective seats 145 of the first forming half mould 141 and one or more second heating elements 36, slidably inserted into respective further seats 146 of the further first forming half mould 142.

The second forming mould means 150 is substantially identical to that of the apparatus disclosed previously and comprises a second forming half mould 151 and a further second forming half mould 152, provided respectively with a gap 155 inside which the first forming half mould 141 is mounted slidably and a further gap 156 is mounted inside which the further first forming half mould 142 is mounted slidably.

The first heating elements 35 and the second heating elements 36 are movable away and towards one another, in opposite directions, along the movement direction T.

In particular, the heating elements 35, 36 are movable with respect to the first forming half moulds 141, 142 between a retracted position E and an extended position G.

In the retracted position E the heating elements 35, 36 are contained inside the respective seats 145, 146 of the first forming half moulds 141, 142, so as to form bottom walls of the forming cavities 143, 144 of the webs 111, 112.

In the extended position G the heating elements 35, 36 protrude from the respective seats 145, 146 and abut on the webs 111, 112 to heat the preforms 210.

The heating elements 35, 36 have a shape that substantially corresponds to that of the preforms 210 to be heated and are shaped so as to remain spaced away from the welding zones 212 of the preforms 210 by a defined distance.

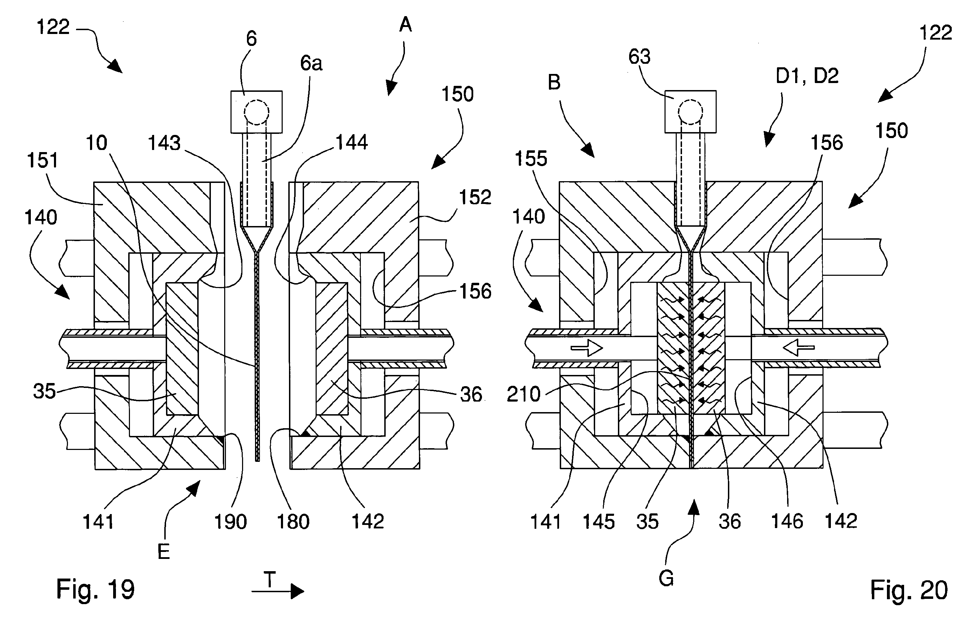

Operation of this type of embodiment of the forming apparatus 1 provides for positioning the first forming mould means 140 and the second forming mould means 150 in the open configuration A, in which the first forming half mould 141 and the second forming half mould 151 are respectively spaced away from the further first forming half mould 142 and from the further second forming half mould 152 to enable the webs 111, 112 to advance. In this open configuration A, the preheating means 35, 36 is in the retracted position E (Figure 19).

Subsequently, the first forming mould means 140 and the second forming mould means 150 are arranged in the first operating configuration B and the preheating means 35, 36 in the extended position G to perform preheating of the preforms 210 (Figure 20).

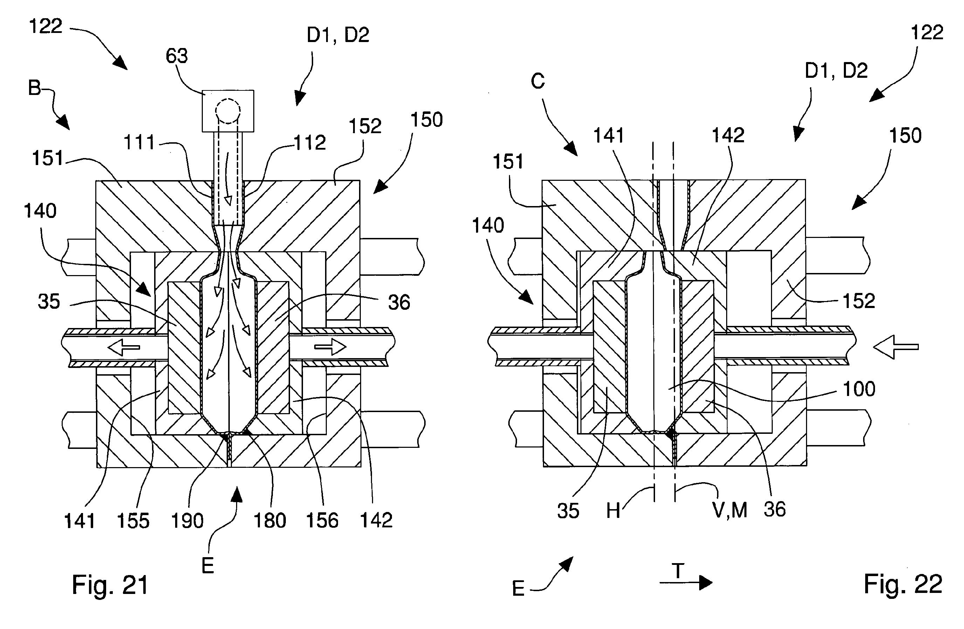

At the end of the preheating step, the preheating means 35, 36 is returned to the retracted position E to enable the subsequent forming step in which the forming fluid, injected by the injecting means 63 inside the preforms 210, induces the first web 111 and the second web 112, which have been made deformable through the effect of the heat, to adhere to the walls of the cavities 143, 144, taking on the shape thereof, so as to give rise to the containers 200 (Figure 21).

In this step, the first forming mould means 140 and the second forming mould means 150 are in the first operating configuration B in which the first forming half mould 141 and the further first forming half mould 142 are in a first closing position D1, whilst the second forming half mould 151 and the further second forming half mould 152 are in a second closing position D2.

Once forming of the objects 200 is performed, the first forming mould means 140 is moved in relation to the second forming mould means 150 from the first operating configuration B to the second operating configuration C so as to perform the blanking operation of the webs 111, 112 at the welding zones 212 (Figure 22).

For this purpose, the cutting means comprises first cutting means 180 associated with the further first forming half mould 142 and second cutting means 190 associated with the second forming half mould 151, said first cutting means 180 and said second cutting means 190 interacting together to cut the webs 111, 112.

Owing to the apparatus of the invention, in the same operating station it is thus possible to preheat, form and cut two facing webs of sheet material, to make objects, in particular containers. In this embodiment, in addition to the advantage disclosed above of the precision of blanking of the objects - ensured by the fact that this operation is performed by the same forming station immediately after the forming step - the advantage is added of preheating the preforms 210 immediately before forming, which can thus occur at a preset and optimum softening temperature. Unlike known thermoforming apparatuses, as a separate preheating station is not necessary, possible problems of cooling of the webs 111, 112 during movement towards the forming station are avoided. In this manner it is possible to obtain optimum plastic deformation of the material of the webs 111, 112 and avoid the formation in said material of residual anomalous tensions or stress.

The apparatus 31 of the invention that comprises, in addition to the aforesaid forming station 122, only the welding station 33 and the cooling station 37 as it enables both the blanking station and the preheating station to be eliminated. The apparatus 31 is thus more compact, simpler and cheaper than known forming apparatuses.

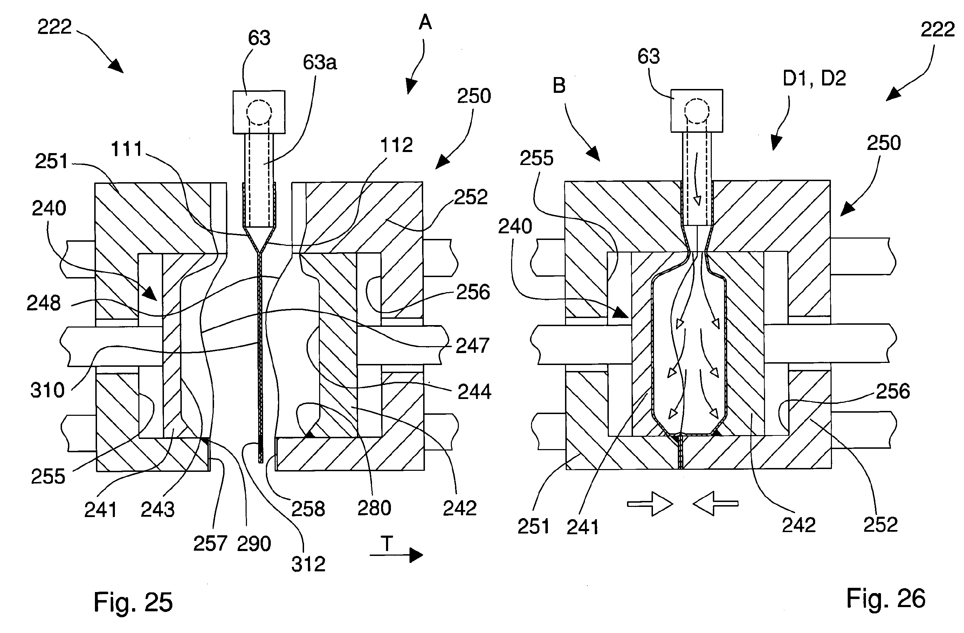

With particular reference to Figures 25 and 26, another version of the thermoforming apparatus 21 is provided that substantially differs through the different configuration of the forming means 240, 250 of the forming station 222.

The first forming half mould 241 and the further first forming half mould 242 of the first forming means 240 have first abutting walls 247, 248 that are complementary to one another and curved.

Equally, the second forming half mould 251 and the further second forming half mould 252 of the second forming means 250 have second abutting walls 257, 258 that are complementary to one another and curved.

The first abutting walls 247, 248 and the second abutting walls 257, 258 can be surfaces with a simple curvature or surfaces with a complex curvature.

The first forming half mould 241 and the further first forming half mould 242 are provided respectively with one or more first cavities 243 and with one or more further first cavities 244 and are movable away from or towards one another, in opposite directions, along the movement direction T.

The second forming half mould 251 and the further second forming half mould 252 are also movable away from or towards one another, in opposite directions, along the movement direction T. The second forming half mould 251 comprises a gap 255 inside which the first forming half mould 241 is slidably mounted. Similarly, the further second forming half mould 252 comprises a further gap 256 inside which the further forming half mould 242 is slidably mounted.

The operation of the forming means 240, 250 of this type of embodiment of the apparatus 201 is substantially similar to that of the forming means 140, 150 illustrated previously.

In the forming step, when the first forming half moulds 241, 242 and the second forming half moulds 251, 252 are in the respective closing positions D1, D2 abutting on the webs 111, 112, injecting forming fluid inside the preforms 310 enables objects 300 to be formed that consist of two shaped and opposite walls 301, 302 that are connected along a welded peripheral edge 303 that extends along a curved surface, defined by the first abutting walls 247, 248 and by the second abutting walls 257, 258.

The action of the forming fluid induces the first web 111 and the second web 112, which have been made deformable through the effect of the heat, not only to adhere to the walls of the cavities 243, 244, taking on the shape thereof, but also to deform according to a curved surface. The welded peripheral edge 303 is deformed by virtue of the stretching of the plastics of the webs 111, 112.

The cutting means 280, 290 comprised in the forming means enables objects 300 to be made in which the welded peripheral edge 303 substantially does not protrude outwards or protrudes by a reduced amount (Figures 27 and 28).

Once the objects 300 have been formed, the first forming mould means 240 is moved with respect to the second forming mould means 250 from the first operating configuration B to the second operating configuration C so as to enable webs 111, 112 to be blanked at the welding zones, according to the previously disclosed manner.

In particular, the first cutting means 280 associated with the first forming half moulds 241, 242 and the second cutting means 290 associated with the second forming half moulds 251, 252, interact together to blank the webs 111, 112.

It should be noted that the apparatus 31 of the invention enables objects 300 with a complex and irregular shape to be made by thermoforming two webs 111, 112 of mutually superimposed and coupled sheet material to be made, in particular objects 300 provided with protruding portions 304, 306 that are undercut, i.e. are not traversed by the same forming plane (Figures 27 and 28). The abutting walls 247, 248, 257, 258 of the forming half moulds 241, 242, 251, 252 can, in fact, traverse the aforesaid protruding portions 304, 306 so as to enable the object to be formed and to enable the object to be extracted easily from the cavities 243, 244.

It is possible to make objects that commonly have to be produced by complex and costly injection-moulding processes. At the same time it is possible to form objects with a customised shape having a pleasing and original appearance compared with other objects with a more traditional appearance, by virtue of the shape and the extending along a curved surface of the welding zone.

In addition to the forming station the thermoforming apparatus 31 comprises a welding station 23, a cooling station 27 and a preheating station 24.

Such operating stations comprise respective mould means provided with respective abutting walls that are flat and parallel to the movement plane M of the webs 111, 112. The two webs 111, 112 are thus welded, cooled along the welding zones and then heated, being maintained substantially coplanar with the movement plane M.

Nevertheless, it is possible to provide another version of the apparatus in which the welding mould means of the welding station 23, the cooling mould means of the cooling station 27 and the preheating mould means of the preheating station 24 have respective abutting walls curve that are substantially similar to the abutting walls of the forming means 240, 250.

In this embodiment of the thermoforming apparatus, a first deformation of the webs 111, 112 along a curved surface is then already performed in the welding station 23 and subsequently in the cooling stations 27 and the preheating stations 24.

In the forming station 222 the already partially deformed preforms 310 are formed by the forming fluid.

In order to facilitate initial deformation of the webs 111, 112, the apparatus 31 may comprise one or more further preheating stations located upstream of the welding station. In the further preheating station, the first web 111 and the second web 112 are heated to a preset temperature so as to prepare the aforesaid webs 111, 112 for deformation in the subsequent operating stations.

## Claims

1. Apparatus for making objects (200; 300), in particular containers, by forming a first web (111) of thermoformable material and a second web (112) of thermoformable material, arranged facing one another and welded together in defined welding zones (212; 312) so as to define preforms (210; 310) of said objects (200; 300), comprising a forming station (22; 122; 222) provided with forming means (40, 50; 140, 150; 240, 250) for forming said objects (200; 300) by injecting a forming fluid inside said preforms (210; 310), said forming station (22; 122; 222) comprising cutting means (80, 90; 180, 190; 280, 290) associated with said forming means (40, 50; 140, 150; 240, 250) and arranged for cutting said first web (111) and said second web (112) at said welding zones (212; 312) so as to separate said objects (200; 300), said forming means comprising first forming mould means (40; 140; 240) and second forming mould means (50; 150; 250), said first forming mould means (40; 140; 240) and said second forming mould means (50; 150; 250) being movable along a movement direction (T) and cooperating together to form said objects (200; 300) and subsequently cut said webs (111, 112), said apparatus further comprising preheating means (35, 36) associated with said forming means (140, 150) for heating said first web (111) and said second web (112), **characterised in that** said preheating means comprises heating elements (35, 36) that are slidably housed in seat means (145, 146) of said first forming mould means (140).

2. Apparatus according to claim 1, wherein said first forming mould means (40; 140; 240) comprises cavity means (43, 44; 143, 144; 243, 244) for receiving and shaping said preforms (210; 310) when dilated by said forming fluid in a forming step.

3. Apparatus according to claim 1 or 2, wherein said second forming mould means (50; 150; 250) is arranged for retaining portions of said webs (111, 112) outside said preforms (210; 310) and comprises gap means (55, 56; 155, 156; 255, 256) arranged for slidably housing said first forming mould means (40; 140; 240).

4. Apparatus according to any one of claims 1 to 3, wherein said cutting means comprises first cutting means (80; 180; 280), associated with said first forming mould means (40; 140; 240), and second cutting means (90; 190; 290), associated with said second forming mould means (50; 150; 250), said first cutting means (80; 180; 280) and said second cutting means (90; 190; 290) being arranged for interacting with one another to cut said webs (111, 112).

5. Apparatus according to claim 4, wherein said first cutting means (80; 180; 280) comprises first cutting profile means associated with peripheral edges of cavity means (44; 144; 244) of said first forming mould means (40; 140; 240).

6. Apparatus according to claim 4 or 5, as claim 4 is appended to claim 3, wherein said second cutting means (90; 190; 290) comprises second cutting profile means associated with peripheral edges of said gap means (55; 155; 255).

7. Apparatus according to any one of claims 1 to 6, wherein said first forming mould means (40; 140; 240) comprises a first forming half mould (41; 141; 241) and a further first forming half mould (42; 142; 242) that are movable away from or towards one another along said movement direction (T).

8. Apparatus according to any one of claims 1 to 7, wherein said second forming mould means (50; 150; 250) comprises a second forming half mould (51; 151; 251) and a further second forming half mould (52; 152; 252) that are movable away from or towards one another along said movement direction (T).

9. Apparatus according to claim 8, as appended to claim 7, wherein said first forming mould means (40; 140; 240) and said second forming mould means (50; 150; 250) are movable concordantly along said movement direction (T) between an open configuration (A), in which said first forming half mould (41; 141; 241) and said second forming half mould (51; 151; 251) are respectively spaced away from said further first forming half mould (42; 142; 242) and from said further second forming half mould (52; 152; 252) to enable said webs (111, 112) to advance, and a first operating configuration (B), in which said first forming half mould (41; 141; 241) and said further first forming half mould (42; 142; 242) abut on said webs (111, 112) in a first closing position (D1), and said second forming half mould (51; 151; 251) and said further second forming half mould (52; 152; 252) abut on said webs (111, 112) in a second closing position (D2).

10. Apparatus according to claim 9, wherein said first forming mould means (40; 140; 240) and said second forming mould means (50; 150; 250), when positioned in said respective closing positions (D1, D2), are further movable with respect to one another along said movement direction (T) in a second operating configuration (C) so as to shear said webs (111, 112).

11. Apparatus according to any one of claims 3 a 10, as claims 4, 7 and 8 are appended to claim 3, wherein said first forming mould means (40; 140; 240) and said gap means (55, 56; 155, 156; 255, 256) have a shape and dimensions substantially corresponding to the shape and dimensions of said objects (200; 300).

12. Apparatus according to any one of claims 1 to 11, wherein said heating elements (35, 36) are mutually movable along said movement direction (T), and with respect to said first forming mould means (140), between a retracted position (E), wherein said heating elements (35, 36) are housed inside said seat means (145, 146) such as to form walls of said cavity means (143, 144), and an extended position (G), wherein said heating elements (35, 36) protrude from said seat means (145, 146) and abut on said webs (111, 112) to heat defined portions of the latter.

13. Apparatus according to claim 12, wherein said heating elements (35, 36) have a shape substantially corresponding to that of said preforms (210; 310).

14. Apparatus according to claim 12 or 13, wherein said heating elements (35, 36) are shaped so as to remain spaced apart from said welding zones (212; 312) by a defined distance, when abutting on said webs (111, 112).

15. Apparatus according to any one of claims 1 to 14, comprising upstream of said forming means (40, 50; 140, 150; 240, 250) and in sequence with respect to an advancing direction (F) of said webs (111, 112) at least one welding station (23; 33) for welding together said webs (111, 112) along said welding zones (212; 312) and a cooling station (27; 37) for cooling said welding zones (212; 312), said apparatus further comprising a preheating station (24) interposed between said cooling station (27) and said forming means (40, 50; 240, 250) for heating internal portions of said preforms (210; 310) to a defined softening temperature.

## Patentansprüche

1. Vorrichtung zur Herstellung von Objekten (200; 300), insbesondere von Behältern, indem eine erste Bahn (111) aus einem thermoformbaren Material und eine zweite Bahn (112) aus thermoformbarem Material gebildet wird, die einander gegenüberliegen und in definierten Schweißzonen (212; 312) zusammengeschweißt sind, um Vorformen ((210; 310) der Objekte (200; 300) zu definieren, wobei die Vorrichtung eine Formstation (22; 122; 222) aufweist, die mit Formmitteln (40, 50; 140, 150; 240, 250) zur Formung der Objekte (200; 300) ausgestattet ist, indem in die Vorformen (210; 310) ein Formfluid injiziert wird, wobei die Formstation (22; 122; 222) Schneidemittel (80, 90; 180, 190; 280, 290) aufweist, die mit den Formmitteln (40, 50; 140, 150; 240, 250) assoziiert sind und die zum Schneiden der ersten Bahn (111) und der zweiten Bahn (112) an den Schweißzonen (212; 312) angeordnet sind, so dass die Objekte (200; 300) getrennt werden, wobei die Formmittel erste Formblockmittel (40; 140; 240) und zweite Formblockmittel (50; 150; 250) aufweisen, wobei die ersten Formblockmittel (40; 140; 240) und die zweiten Formblockmittel (50; 150; 250) entlang einer Bewegungsrichtung (T) bewegbar sind und zusammenwirken, um die Objekte (200; 300) zu bilden und anschließend die Bahnen (111, 112) zu schneiden, wobei das Gerät ferner Vorheizmittel (35, 36) aufweist, die mit den Formmitteln (140, 150) assoziiert sind, zum Aufheizen der ersten Bahn (111) und der zweiten Bahn (112), **dadurch gekennzeichnet, dass** die Vorheizmittel Heizelemente (35, 36) aufweisen, die in Aufnahmemitteln (145, 146) der ersten Formblockmittel (140) verschiebbar untergebracht sind.

2. Vorrichtung nach Anspruch 1, wobei die ersten Formblockmittel (40; 140; 240) Hohlraummittel (43, 44; 143; 144; 243, 244) aufweisen, um die Vorformen (210; 310) aufzunehmen und zu formen, wenn sie in einem Formschritt durch das Formfluid erweitert werden.

3. Vorrichtung nach Anspruch 1 oder 2, wobei die zweiten Formblockmittel (50; 150; 250) angeordnet sind, um Abschnitte der Bahnen (111, 112) außerhalb der Vorformen (210; 310) zu halten, und wobei sie ferner Abstandsmittel (55, 56; 155, 156; 255, 256) aufweisen, die zur verschiebbaren Unterbringung der ersten Formblockmittel (40; 140; 240) angeordnet sind.

4. Vorrichtung nach einem der Ansprüche 1 bis 3, wobei die Schneidmittel erste Schneidmittel (80; 180; 280) aufweisen, die mit den ersten Formblockmitteln (40; 140; 240) assoziiert sind, sowie zweite Schneidmittel (90; 190; 290), die mit den zweiten Formblockmitteln (50; 150; 250) assoziiert sind, wobei die ersten Schneidmittel (80; 180; 280) und die zweiten Schneidmittel (90; 190; 290) angeordnet sind, um miteinander zusammenzuwirken, um die Bahnen (111, 112) zu schneiden.

5. Vorrichtung nach Anspruch 4, wobei die ersten Schneidemittel (80; 180; 280) erste Schneidprofilmittel aufweisen, die mit peripheren Rändern von Hohlraummitteln (44; 144; 244) der ersten Formblockmittel (40; 140; 240) assoziiert sind.

6. Vorrichtung nach Anspruch 4 oder 5, wenn Anspruch 4 von Anspruch 3 abhängig ist, wobei die zweiten Schneidemittel (90; 190; 290) zweite Schneidprofilmittel aufweisen, die mit peripheren Rändern der Abstandsmittel (55; 155; 255) assoziiert sind.

7. Vorrichtung nach einem der Ansprüche 1 bis 6, wobei die ersten Formblockmittel (40; 140; 240) eine erste Formblockhälfte (41; 141; 241) und eine weitere erste Formblockhälfte (42; 142; 242) aufweisen, welche entlang der Bewegungsrichtung (T) aufeinander zu oder voneinander weg bewegbar sind.

8. Vorrichtung nach einem der Ansprüche 1 bis 7, wobei die zweiten Formblockmittel (50; 150; 250) eine zweite Formblockhälfte (51; 151; 251) und eine weitere zweite Formblockhälfte (52; 152; 252) aufweisen, die entlang der Bewegungsrichtung (T) aufeinander zu oder voneinander weg bewegbar sind.

9. Vorrichtung nach Anspruch 8, sofern abhängig von Anspruch 7, wobei die ersten Formblockmittel (40; 140; 240) und die zweiten Formblockmittel (50; 150; 250) übereinstimmend entlang der Bewegungsrichtung (T) zwischen einer offenen Konfiguration (A), in welcher die erste Formblockhälfte (41; 141; 241) und die zweite Formblockhälfte (51; 151; 251) jeweils von der weiteren ersten Formblockhälfte (42; 142; 242) und von der weiteren zweiten Formblockhälfte (52; 152; 252) getrennt sind, um den Bahnen (111, 112) ein Fortschreiten zu ermöglichen, und einer ersten Betriebskonfiguration (B) bewegbar sind, in welcher die erste Formblockhälfte (41, 141; 241) und die weitere erste Formblockhälfte (42; 142; 242) in einer ersten geschlossenen Position (D1) an die Bahnen (111, 112) anliegen, und die zweite Formblockhälfte (51; 151; 251) und die weitere zweite Formblockhälfte (52; 152; 252) an die Bahnen (111, 112) in einer zweiten Schließposition (D2) anliegen.

10. Vorrichtung nach Anspruch 9, wobei die ersten Formblockmittel (40; 140; 240) und die zweiten Formblockmittel (50; 150; 250) in Bezug aufeinander entlang der Bewegungsrichtung (T) in eine zweite Betriebskonfiguration (C) bewegbar sind, wenn sie in den jeweiligen Schließpositionen (D1, D2) positioniert sind, so dass die Bahnen (111, 112) abgeschnitten werden.

11. Vorrichtung nach einem der Ansprüche 3 bis 10, sofern die Ansprüche 4, 7 und 8 auf Anspruch 3 rückbezogen sind, wobei die ersten Formblockmittel (40; 140; 240) und die Abstandssmittel (55, 56; 155, 156; 255, 256) eine Form und Dimensionen besitzen, die im Wesentlichen der Form und den Dimensionen der Objekte (200; 300) entspricht.

12. Vorrichtung nach einem der Ansprüche 1 bis 11, wobei die Heizelemente (35, 36) entlang der Bewegungsrichtung (T) und Bezug auf die ersten Formblockmittel (140) wechselseitig zwischen einer zurückgezogenen Position (E), in welcher die Heizelemente (35, 36) innerhalb der Aufnahmemittel (145, 146) aufgenommen sind, um Wände der Hohlraummittel (143, 144) zu bilden, und einer ausgefahrenen Position (G) bewegbar sind, in welcher die Heizelemente (35, 36) von den Aufnahmemitteln (145, 146) vorstehen und an die Bahnen (111, 112) anliegen, um definierte Abschnitte von diesen zu erhitzen.

13. Vorrichtung nach Anspruch 12, in welchem die Heizelemente (35, 36) eine Form besitzen, die im Wesentlichen derjenigen der Vorformen (210; 310) entspricht.

14. Vorrichtung nach Anspruch 12 oder 13, in welchem die Heizelemente (35, 36) derart geformt sind, dass sie von den Schweißzonen (212; 312) durch einen definierten Abstand voneinander getrennt bleiben, wenn sie an die Bahnen (111; 112) anliegen.

15. Vorrichtung nach einem der Ansprüche 1 bis 14, die ferner, den Formmitteln (40, 50; 140; 150; 240, 250) vorgelagert und in Reihe mit der Vorschubrichtung (F) der Bahnen (111, 112) vorliegend, eine Schweißstation (23; 33) zum Zusammenschweißen der Bahnen (111, 112) entlang der Schweißzonen (212; 312) aufweist, sowie eine Kühlstation (27; 37), um die Schweißzonen (212; 312) abzukühlen, wobei die Vorrichtung ferner eine Vorheizstation (24) aufweist, die zwischen der Kühlstation (27) und den Formmitteln (40, 50; 240, 250) eingefügt liegt, um innere Abschnitte der Vorformen (210; 310) auf eine definierte Erweichungstemperatur vorzuheizen.

## Revendications

1. Appareil destiné à fabriquer des objets (200 ; 300), en particulier des récipients, par formation d'une première nappe (111) de matériau thermoformable et d'une deuxième nappe (112) de matériau thermo-formable disposées en face l'une de l'autre et soudées ensemble dans des zones de soudage définies (212 ; 312) de manière à définir des préformes (210 ; 310) desdits objets (200 ; 300), comprenant un poste de formage (22 ; 122 ; 222) équipé de moyens de formage (40, 50 ; 140, 150 ; 240, 250) pour former lesdits objets (200 ; 300) par injection d'un fluide de formage à l'intérieur desdites préformes (210 ; 310), ledit poste de formage (22 ; 122 ; 222) comprenant des moyens de coupe (80, 90 ; 180, 190 ; 280, 290) associés auxdits moyens de formage (40, 50 ; 140, 150 ; 240, 250) et organisés pour couper ladite première nappe (111) et ladite deuxième nappe (112) au niveau desdites zones de soudage (212 ; 312) de manière à séparer lesdits objets (200 ; 300), lesdits moyens de formage comprenant des premiers moyens de moule de formage (40 ; 140 ; 240) et des deuxièmes moyens de moule de formage (50 ; 150 ; 250), lesdits premiers moyens de moule de formage (40 ; 140 ; 240) et lesdits deuxièmes moyens de moule de formage (50 ; 150 ; 250) étant mobiles le long d'une direction de déplacement (T) et coopérant ensemble pour former lesdits objets (200 ; 300) et ensuite couper lesdites nappes (111, 112), ledit appareil comprenant en outre des moyens de préchauffage (35, 36) associés auxdits moyens de formage (140, 150) pour chauffer ladite première nappe (111) et ladite deuxième nappe (112), **caractérisé en ce que** lesdits moyens de préchauffage comprennent des éléments de chauffage (35, 36) qui sont logés, en pouvant y coulisser, dans des moyens de siège (145, 146) desdits premiers moyens de moule de formage (140).

2. Appareil selon la revendication 1, dans lequel lesdits premiers moyens de moule de formage (40 ; 140 ; 240) comprennent des moyens de cavité (43, 44 ; 143, 144 ; 243, 244) pour recevoir et former lesdites préformes (210 ; 310) lorsqu'elles sont dilatées par ledit fluide de formage dans une étape de formage.

3. Appareil selon la revendication 1 ou 2, dans lequel lesdits deuxièmes moyens de moule de formage (50 ; 150 ; 250) sont organisés pour retenir des parties desdites nappes (111, 112) à l'extérieur desdites préformes (210 ; 310) et comprennent des moyens d'intervalle (55, 56 ; 155, 156 ; 255, 256) organisés pour loger de manière coulissante lesdits premiers moyens de moule de formage (40 ; 140 ; 240).

4. Appareil selon l'une quelconque des revendications 1 à 3, dans lequel lesdits moyens de coupe comprennent des premiers moyens de coupe (80 ; 180 ; 280), associés auxdits premiers moyens de moule de formage (40 ; 140 ; 240), et des deuxièmes moyens de coupe (90 ; 190 ; 290), associés auxdits deuxièmes moyens de moule de formage (50 ; 150 ; 250), lesdits premiers moyens de coupe (80 ; 180 ; 280) et lesdits deuxièmes moyens de coupe (90 ; 190 ; 290) étant organisés de manière à interagir les uns avec les autres pour couper lesdites nappes (111, 112).

5. Appareil selon la revendication 4, dans lequel lesdits premiers moyens de coupe (80 ; 180 ; 280) comprennent des premiers moyens de profil de coupe associés aux bords périphériques des moyens de cavité (44 ; 144 ; 244) desdits premiers moyens de moule de formage (40 ; 140 ; 240).

6. Appareil selon la revendication 4 ou 5, dans la mesure où la revendication 4 dépend de la revendication 3, dans lequel lesdits deuxièmes moyens de coupe (90 ; 190 ; 290) comprennent des deuxièmes moyens de profil de coupe associés aux bords périphériques desdits moyens d'intervalle (55 ; 155 ; 255).

7. Appareil selon l'une quelconque des revendications 1 à 6, dans lequel lesdits premiers moyens de moule de formage (40 ; 140 ; 240) comprennent un premier demi-moule de formage (41 ; 141 ; 241) et un premier demi-moule de formage supplémentaire (42 ; 142 ; 242) qui sont mobiles pour s'éloigner ou se rapprocher l'un de l'autre le long de ladite direction de déplacement (T).

8. Appareil selon l'une quelconque des revendications 1 à 7, dans lequel lesdits deuxièmes moyens de moule de formage (50 ; 150 ; 250) comprennent un deuxième demi-moule de formage (51 ; 151 ; 251) et un deuxième demi-moule de formage supplémentaire (52 ; 152 ; 252) qui sont mobiles pour s'éloigner ou se rapprocher l'un de l'autre le long de ladite direction de déplacement (T).

9. Appareil selon la revendication 8, dans la mesure où elle dépend de la revendication 7, dans lequel lesdits premiers moyens de moule de formage (40 ; 140 ; 240) et lesdits deuxièmes moyens de moule de formage (50 ; 150 ; 250) sont mobiles de manière concordante le long de ladite direction de déplacement (T) entre une configuration ouverte (A), dans laquelle ledit premier demi-moule de formage (41 ; 141 ; 241) et ledit deuxième demi-moule de formage (51 ; 151 ; 251) sont respectivement espacés par rapport audit premier demi-moule de formage supplémentaire (42 ; 142 ; 242) et par rapport audit deuxième demi-moule de formage supplémentaire (52 ; 152 ; 252) pour permettre auxdites nappes (111, 112) d'avancer, et une première configuration de fonctionnement (B), dans laquelle ledit premier demi-moule de formage (41 ; 141 ; 241) et ledit premier demi-moule de formage supplémentaire (42 ; 142 ; 242) sont en appui sur lesdites nappes (111, 112) dans une première position de fermeture (D1), et ledit deuxième demi-moule de formage (51 ; 151 ; 251) et ledit deuxième demi-moule de formage supplémentaire (52 ; 152 ; 252) sont en appui sur lesdites nappes (111, 112) dans une deuxième position de fermeture (D2).

10. Appareil selon la revendication 9, dans lequel lesdits premiers moyens de moule de formage (40 ; 140 ; 240) et lesdits deuxièmes moyens de moule de formage (50 ; 150 ; 250) sont en outre, lorsqu'ils sont positionnés dans lesdites positions de fermeture (D1, D2) respectives, mobiles l'un par rapport à l'autre le long de ladite direction de déplacement (T) dans une deuxième configuration de fonctionnement (C) de manière à cisailler lesdites nappes (111, 112).

11. Appareil selon l'une quelconque des revendications 3 à 10, dans la mesure où les revendications 4, 7 et 8 dépendent de la revendication 3, dans lequel lesdits premiers moyens de moule de formage (40 ; 140 ; 240) et lesdits moyens d'intervalle (55, 56 ; 155, 156 ; 255, 256) ont une forme et des dimensions correspondant sensiblement à la forme et aux dimensions desdits objets (200 ; 300).

12. Appareil selon l'une quelconque des revendications 1 à 11, dans lequel lesdits éléments de chauffage (35, 36) sont mobiles l'un par rapport à l'autre le long de ladite direction de déplacement (T), ainsi que par rapport auxdits premiers moyens de moule de formage (140), entre une position rétractée (E), dans laquelle lesdits éléments de chauffage (35, 36) sont logés à l'intérieur desdits moyens de siège (145, 146) de manière à former des parois desdits moyens de cavité (143, 144), et une position déployée (G), dans laquelle lesdits éléments de chauffage (35, 36) s'écartent desdits moyens de siège (145, 146) et sont en appui sur lesdites nappes (111, 112) pour chauffer des parties définies de celles-ci.

13. Appareil selon la revendication 12, dans lequel lesdits éléments de chauffage (35,36) ont une forme correspondant essentiellement à celle desdites préformes (210 ; 310).

14. Appareil selon la revendication 12 ou 13, dans lequel lesdits éléments de chauffage (35, 36) sont conformés de manière à rester espacés desdites zones de soudage (212 ; 312) d'une distance définie, lorsqu'ils sont en appui sur lesdites nappes (111, 112).

15. Appareil selon l'une quelconque des revendications 1 à 14, comprenant, en amont desdits moyens de formage (40, 50 ; 140, 150 ; 240, 250) et à la suite les uns des autres par rapport à une direction de progression (F) desdites nappes (111, 112), au moins un poste de soudage (23 ; 33), pour souder ensemble lesdites nappes (111, 112) le long desdites zones de soudage (212 ; 312), et un poste de refroidissement (27 ; 37), pour refroidir lesdites zones de soudage (212 ; 312), ledit appareil comprenant en outre un poste de préchauffage (24) interposé entre ledit poste de refroidissement (27) et lesdits moyens de formage (40, 50 ; 240, 250) pour chauffer des parties internes desdites préformes (210 ; 310) jusqu'à une température de ramollissement définie.
